# EUROPÄISCHE PATENTSCHRIFT

(11) **EP 0 918 929 B1**
(45) Veröffentlichungstag und Bekanntmachung des Hinweises auf die Patenterteilung: **30.06.2004**
(21) Anmeldenummer: 98914821.8
(22) Anmeldetag: 25.02.1998
(51) Int. Cl.: F02M 69/54, F02M 55/00, F16L 37/084, F16L 37/10, F16L 37/12

(54) **BEFESTIGUNGSANORDNUNG ZUM HALTEN EINES AGGREGATS AN EINEM KÖRPER EINER KRAFTSTOFFVERSORGUNGSANLAGE**
SECURING DEVICE FOR FIXING A UNIT TO THE BODY OF A FUEL SUPPLY INSTALLATION
DISPOSITIF DE FIXATION POUR MAINTENIR UN ORGANE SUR UN CORPS D'UN SYSTEME D'ALIMENTATION EN CARBURANT

(30) Priorität: 07.06.1997 DE 19724165
(43) Veröffentlichungstag der Anmeldung: 02.06.1999
(73) Patentinhaber: ROBERT BOSCH GMBH, 70442 Stuttgart (DE)
(72) Erfinder: BRAUN, Hans-Peter, D-72172 Renfrizhausen (DE); WÖRZ, Stefan, D-71701 Schwieberdingen (DE)
(86) Internationale Anmeldenummer: PCT/DE1998/000556
(87) Internationale Veröffentlichungsnummer: WO 1998/057061

(56) Entgegenhaltungen:
- WO-A-98/42973
- DE-A- 4 007 436
- US-A- 5 070 844
- US-A- 5 146 896

## Beschreibung

### Stand der Technik

Die Erfindung geht aus von einer Befestigungsanordnung zum Halten eines Aggregats an einem Körper einer Kraftstoffversorgungsanlage nach der Gattung des Anspruchs 1.

Die US 5,146,896 zeigt eine einstückige metallische Halteklammer, die einen Kraftstoffdruckregler in seiner installierten Position hält. Die Klammer ist durch Formtechnik aus Metall gleichmäßiger Dicke hergestellt. Sie umfasst einen dünnen, flachen, gegabelten Abschnitt, der in in einem Körper vorgesehenen Schlitzen angeordnet ist. Die Klammer umfasst des weiteren einen Körperklemmabschnitt. Der Körperklemmabschnitt hat Federfinger, die den Körper des Druckreglers elastisch umgeben und halten.

Die US 5,070,844 zeigt einen Clip zum Halten eines Rohres an einem Nippel.

Die nicht vorveröffentlichte WO 98/42973 A1 zeigt eine in einem an einem Körper vorgesehenen Schlitz gehaltene Klammer. Die Klammer dient zum Halten eines Druckreglers an dem Körper. Die Schenkel der Klammer sind auf der an sich offenen Seite der Klammer etwas nach innen verformt, so dass die Klammer in fertig montiertem Zustand nicht aus dem Schlitz herausfallen kann. An der Klammer ist eine Lasche angeschweißt oder angelötet, an der ein Draht elektrisch angeschlossen werden kann. Der den Druckregler beaufschlagende hydraulische Druck drückt den Druckregler gegen die Klammer und sorgt so für einen elektrischen Kontakt zwischen dem Druckregler und der Klammer.

Eine Kraftstoffversorgungsanlage einer Brennkraftmaschine, vorzugsweise bei einem Kraftfahrzeug, umfasst üblicherweise mehrere Aggregate. Bei der Kraftstoffversorgungsanlage fördert eine Kraftstoffpumpe Kraftstoff aus einem Kraftstoffvorrat aus einem Kraftstoffvorratsbehälter über verschiedene Aggregate, bis der Kraftstoff schließlich zu einem Brennraum der Brennkraftmaschine gelangt. Eines der Aggregate ist beispielsweise ein Druckregler, ein Druckminderer, ein Kraftstoffspeicher, ein Druckdämpfer, ein Kraftstofffilter oder dergleichen.

Es kann sein, dass eines der Aggregate, beispielsweise der Druckregler bzw. der Druckminderer, selbst bzw. ein Bauteil dieses Aggregats, elektrisch leitend ist, wobei jedoch das elektrisch leitende Bauteil bzw. das Aggregat elektrisch isoliert angeordnet ist, beispielsweise dadurch, dass das Aggregat an einem aus nichtleitendem Kunststoff bestehenden Grundkörper angeordnet ist.

In dem Aggregat mit einem elektrisch leitenden Bauteil kann durch elektrische Ladungstrennung eine elektrostatische Aufladung des elektrisch leitenden Bauteils erfolgen. Weil die elektrostatische Aufladung des elektrisch leitenden Bauteils üblicherweise zu keinem Problem, insbesondere zu keiner Funktionsstörung führt, wird die elektrostatische Aufladung des elektrisch leitenden Bauteils normalerweise nicht bemerkt oder zumindest nicht beachtet. Weil es Aggregate gibt, durch die der Kraftstoff beispielsweise mit hoher Strömungsgeschwindigkeit durch einen engen Spalt strömt, beispielsweise bei einem Druckregler bzw. Druckminderer, kann die elektrostatische Aufladung des elektrisch leitenden Bauteils sehr stark sein.

Manchmal, zum Glück sehr selten, konnte es vorkommen, daß bei einer Kraftstoffversorgungsanlage ein Brand bzw. eine Explosion mit nicht erklärbarer Ursache entstand. Der Erfinder vorliegender Patentanmeldung ist der Meinung, daß mindestens ein Teil dieser nicht erklärbaren Brände durch elektrostatische Aufladung eines elektrisch isolierten Bauteils eines Aggregats der Kraftstoffversorgungsanlage verursacht worden ist.

Um die Kraftstoffversorgungsanlage mit wenig Aufwand zusammenbauen zu können, ist es wichtig, daß der Arbeitsaufwand zum Anbauen des Aggregats an einen Körper der Kraftstoffversorgungsanlage gering ist, und es ist wichtig, daß das Aggregat sicher an dem Körper gehalten wird.

Die deutsche Patentschrift DE 40 07 436 C2 zeigt eine Befestigungsanordnung für einen Druckregler, der mit einer Kraftstoffversorgungsanlage über eine topfförmige Aufnahme verbunden und mittels eines Befestigungselementes, das in einen Kragen der Aufnahme eingreift, fixiert ist, wobei das Befestigungselement als radial nach außen federnder Ring ausgebildet ist, der formschlüssig in die Aufnahme eingreift. Bei dieser Befestigungsanordnung ist eine sichere elektrische Kontaktierung zwischen dem Befestigungselement und dem Druckregler nicht gewährleistet. Darüberhinaus ist bei dieser Befestigungsanordnung zum Einbauen des Befestigungselements in die Aufnahme ein spezielles Werkzeug erforderlich.

Weil nicht gewährleistet ist, daß der Druckregler und das Befestigungselement unter allen Umständen zusammengedrückt werden, ist eine dauernde sichere elektrische Kontaktierung zwischen dem Druckregler und dem Befestigungselement nicht sichergestellt.

### Vorteile der Erfindung

Die erfindungsgemäße Befestigungsanordnung mit den kennzeichnenden Merkmalen des Anspruchs 1 hat demgegenüber den Vorteil, daß unter allen Umständen eine sichere elektrische Kontaktierung zwischen dem Aggregat und dem Befestigungselement gewährleistet ist.

Die sichere elektrische Kontaktierung zwischen dem Aggregat und dem Befestigungselement bietet eine einfache, vorteilhafte Möglichkeit, eine elektrostatische Aufladung des Aggregats über das Befestigungselement zu verhindern und dadurch eine Gefahrenquelle zu beseitigen.

Aufgrund der Möglichkeit zur elektrischen Kontaktierung des Aggregats über das Befestigungselement ist vorteilhafterweise keine Abänderung des Aggregats erforderlich, um das Aggregat 20 an einem definierten elektrischen Potential anschließen zu können.

Weil es einfach ist, das Befestigungselement quer zur Halterichtung mit einer guten Elastizität zu versehen, läßt sich vorteilhafterweise leicht erreichen, daß auch bei großen Maßtoleranzen eine gute elektrische Kontaktierung zwischen dem Aggregat und dem Befestigungselement gewährleistet ist.

Durch die in den Unteransprüchen aufgeführten Maßnahmen sind vorteilhafte Weiterbildungen und Verbesserungen der im Hauptanspruch angegebenen Befestigungsanordnung möglich.

Der Anschluß am Befestigungselement bietet den Vorteil, daß auf einfache Weise an dem Befestigungselement ein elektrischer Leiter angeschlossen werden kann.

Wird der Anschluß in Form eines Flachsteckkontakts ausgebildet, so hat dies den Vorteil, daß der elektrische Leiter auf einfache Weise an das Befestigungselement angesteckt werden kann.

Wird das Befestigungselement zumindest im Federbereich quer zur Halterichtung dünner als in Halterichtung ausgeführt, so ergibt sich der Vorteil, daß das Aggregat in Halterichtung relativ unnachgiebig gegen den Körper gehalten wird, quer zur Halterichtung ist das Befestigungselement jedoch relativ gut elastisch nachgiebig und somit gut federnd.

Wird an dem Körper ein quer zur Halterichtung federndes, im montierten Zustand das Befestigungselement hintergreifendes Halteelement vorgesehen, so erhält man den Vorteil, daß das Befestigungselement sehr einfach an den Körper angebaut werden kann.

Durch das Blockierelement wird der Vorteil erreicht, daß nach dem Anbauen des Befestigungselements am Körper ein dauerfestes und sicheres Halten des Befestigungselements am Körper gewährleistet ist, ohne daß dazu großer Materialaufwand erforderlich wird, insbesondere kann das Halteelement am Körper relativ materialsparend ausgeführt sein.

### Zeichnung

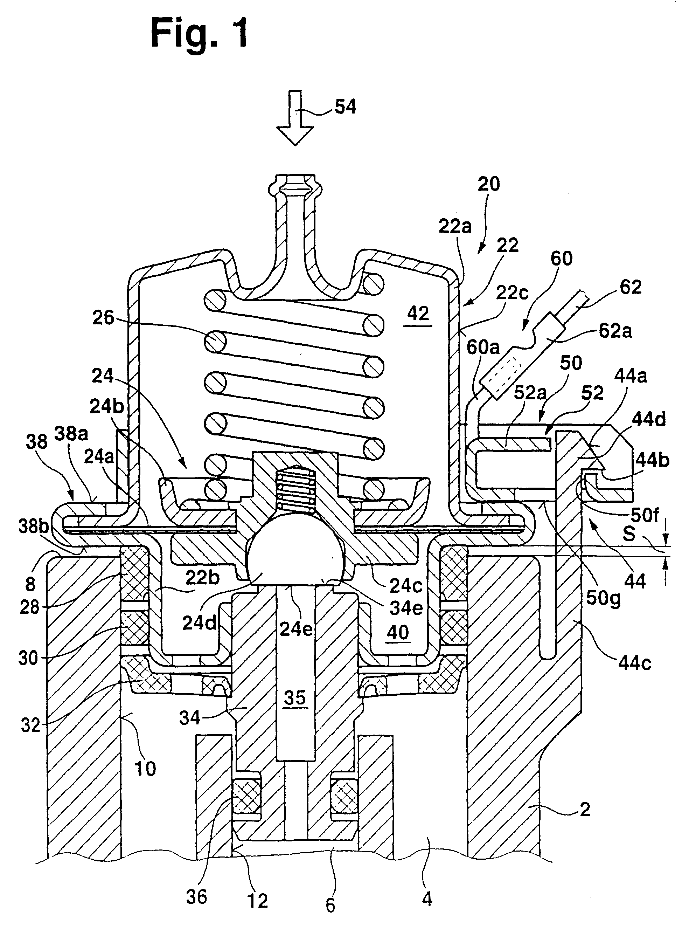

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figuren 1 bis 7 verschiedene Einzelheiten und Ansichten unterschiedlich ausgeführter Ausführungsbeispiele.

### Beschreibung der Ausführungsbeispiele

Die erfindungsgemäß ausgeführte Befestigungsanordnung dient zum Halten eines Aggregats an einem Körper einer Kraftstoffversorgungsanlage. Bei der Kraftstoffversorgungsanlage wird Kraftstoff einer Brennkraftmaschine zugeführt. Als Brennkraftmaschine kann beispielsweise ein Ottomotor in Frage kommen. Bei dem Kraftstoff handelt es sich beispielsweise um leicht entflammbares Benzin.

Eine Kraftstoffversorgungsanlage besteht normalerweise aus einer Vielzahl von Bauteilen bzw. aus verschiedenen Körpern, an die ein Aggregat oder meistens mehrere Aggregate angebaut werden. Die Kraftstoffversorgungsanlage umfaßt beispielsweise einen aus elektrisch nichtleitendem Kunststoff bestehenden Deckel zum Abdecken eines Kraftstoffvorratsbehälters, wobei in den Deckel bzw. in diesen Körper ein Aggregat angebaut wird und das Aggregat beispielsweise ein Druckregler oder ein Druckminderer sein kann. Auch ein Kraftstoffverteilrohr der Kraftstoffversorgungsanlage bildet einen Körper, an den ein Aggregat, beispielsweise ein Druckregler, ein Druckminderer, ein Druckspeicher, ein Druckdämpfer, ein Filter oder ein ähnliches Aggregat angebaut wird. Um den Zusammenbau der Kraftstoffversorgungsanlage so zu vereinfachen, ist es wichtig, daß das Aggregat einfach, leicht und sicher mit dem Körper verbunden werden kann.

Die Figur 1 zeigt ein erstes, bevorzugt ausgewähltes, besonders vorteilhaftes Ausführungsbeispiel.

Die Figur 1 zeigt einen zu einer Kraftstoffversorgungsanlage gehörenden Körper 2. Der Körper 2 besteht beispielsweise aus elektrisch nichtleitendem Material, vorzugsweise aus Kunststoff, oder der Körper ist in seiner Umgebung so angeordnet, daß er keine elektrisch leitende Verbindung zu einem definierten elektrischen Potential hat.

Durch den Körper 2 führen verschiedene Kanäle. Einer der Kanäle dient als Kraftstoffzulauf 4. Über den Kraftstoffzulauf 4 kann von einer Kraftstoffpumpe geförderter Kraftstoff zuströmen. Die Kraftstoffpumpe ist der besseren Übersichtlichkeit wegen nicht dargestellt. Über eine aus dem Kraftstoffzulauf 4 abzweigende, nicht dargestellte Leitung gelangt der Kraftstoff beispielsweise zu nicht dargestellten Kraftstoffeinspritzventilen. Über einen weiteren Kanal, der als Kraftstoffrücklauf dient, kann Kraftstoff beispielsweise in einen der besseren Übersichtlichkeit wegen nicht dargestellten Kraftstoffvorratsbehälter zurückströmen.

Dieser Kanal wird nachfolgend als Kraftstoffweiterlauf 6 bezeichnet.

Es gibt auch Fälle, bei denen der Kraftstoff über den Kraftstoffweiterlauf 6 beispielsweise zu einem der besseren Übersichtlichkeit wegen nicht dargestellten Kraftstoffverteilrohr oder zu einem nicht dargestellten Einspritzventil gelangt.

Am Körper 2 gibt es einen nach außen weisenden stirnseitigen Absatz 8. Der Absatz 8 kann nach außen ragen oder in Abweichung zum dargestellten Ausführungsbeispiel vertieft im Körper 2 vorgesehen sein. Ausgehend vom stirnseitigen Absatz 8 führt eine zylindrische Eindrehung 10 in den Körper 2. Koaxial zur Eindrehung 10 führt eine kleinere, zylindrische Bohrung 12 in den Körper 2. Die Eindrehung 10 hat Verbindung zum Kraftstoffzulauf 4, und die Bohrung 12 ist mit dem Kraftstoffweiterlauf 6 verbunden.

In die Eindrehung 10 ist ein Aggregat 20 eingesetzt. Beim bevorzugt ausgewählten Ausführungsbeispiel ist das Aggregat 20 in Form eines Druckreglers ausgebildet. Es sei darauf hingewiesen, daß das Aggregat 20 beispielsweise auch ein Druckminderventil, ein Druckspeicher, ein Druckdämpfer, ein Kraftstoffilter, ein Einspritzventil oder dergleichen sein kann.

Das beispielhaft dargestellte Aggregat 20 umfaßt ein Gehäuse 22, eine Membraneinheit 24, eine Ventilfeder 26, einen Führungsring 28, eine Dichtung 30, eine Scheibe 32, eine Düse 34 und eine Dichtung 36. Beim dargestellten Ausführungsbeispiel besteht das Gehäuse 22 aus einem ersten Gehäuseteil 22a und einem zweiten Gehäuseteil 22b. Die Membraneinheit 24 umfaßt eine Membran 24a, einen ersten Teller 24b, einen zweiten Teller 24c und einen Schließkörper 24d.

Die beiden Gehäuseteile 22a, 22b sind über eine Bördelverbindung fest miteinander verbunden. Wegen der Bördelverbindung entsteht am Gehäuse 22 ein umlaufender, radial vorstehender Wulst 38. Der Wulst 38 hat eine dem Absatz 8 zugewandte radial verlaufende Stirnseite 38b und eine vom Körper 2 abgewandte, radial verlaufende Stirnseite 38a. Das Gehäuseteil 22a des Gehäuses 22 hat eine umlaufende zylindrische oder leicht kegelige Mantelfläche 22c.

Die Membran 24a hat ein zentrisches Loch, über das die Membran 24a zwischen den beiden Tellern 24b, 24c dicht und fest eingebaut ist. Der Außenumfang der Membran 24a der Membraneinheit 24 ist im Bereich der den Wulst 38 bildenden Bördelverbindung zwischen den beiden Gehäuseteilen 22a, 22b dicht und fest eingespannt. Die Membraneinheit 24 trennt innerhalb des Gehäuses 22 einen Druckraum 40 gegenüber einem Ventilraum 42.

Die Düse 34 hat eine dem Schließkörper 24d der Membraneinheit 24 zugewandte innere Stirnseite. Die innere Stirnseite der Düse 34 dient als Ventilsitz bzw. als Ventilfläche 34e. Ausgehend von der Ventilfläche 34e führt eine Öffnung 35 koaxial durch die Düse 34 zum Kraftstoffweiterlauf 6. Abhängig vom im Druckraum 40 herrschenden Druck, sowie abhängig vom im Ventilraum 42 herrschenden Druck, sowie abhängig von der Kraft der Ventilfeder 26 und abhängig vom Druck in der durch die Düse 34 führenden Öffnung 35 hebt der Schließkörper 24d von der Ventilfläche 34e ab oder aber eine am Schließkörper 24d vorgesehene Ventilfläche 24e liegt an der Ventilfläche 34e der Düse 34 an, so daß die Öffnung 35 vom Druckraum 40 abgetrennt ist und kein Kraftstoff aus dem Kraftstoffzulauf 4 durch das Aggregat 20 in den Kraftstoffweiterlauf 6 strömen kann. Übersteigt der Druck in dem Druckraum 40 einen bestimmten Wert, dann hebt die Ventilfläche 24e der beweglichen Membraneinheit 24 von der gehäusefesten Ventilfläche 34e ab, und der Kraftstoff kann aus dem Kraftstoffzulauf 4 durch den engen Spalt zwischen den Ventilflächen 24e, 34e in den Kraftstoffweiterlauf 6 strömen.

Der Führungsring 28 und die Scheibe 32 sorgen für eine leichte Einbaumöglichkeit des Aggregats 20 in die Eindrehung 10. Die Dichtung 30 sorgt dafür, daß kein Kraftstoff aus dem Inneren des Körpers 2 nach außen dringen kann, und die Dichtung 36 trennt den Kraftstoffweiterlauf 6 gegenüber dem Kraftstoffzulauf 4.

An den Körper 2 ist ein Halteelement 44 angeformt. In das Halteelement 44 ist ein Befestigungselement 50 eingehängt. Das vom Halteelement 44 gehaltene Befestigungselement 50 hält das Aggregat 20 am Körper 2, beim dargestellten Ausführungsbeispiel so, daß das Aggregat 20 nicht aus der Eindrehung 10 herausfallen kann.

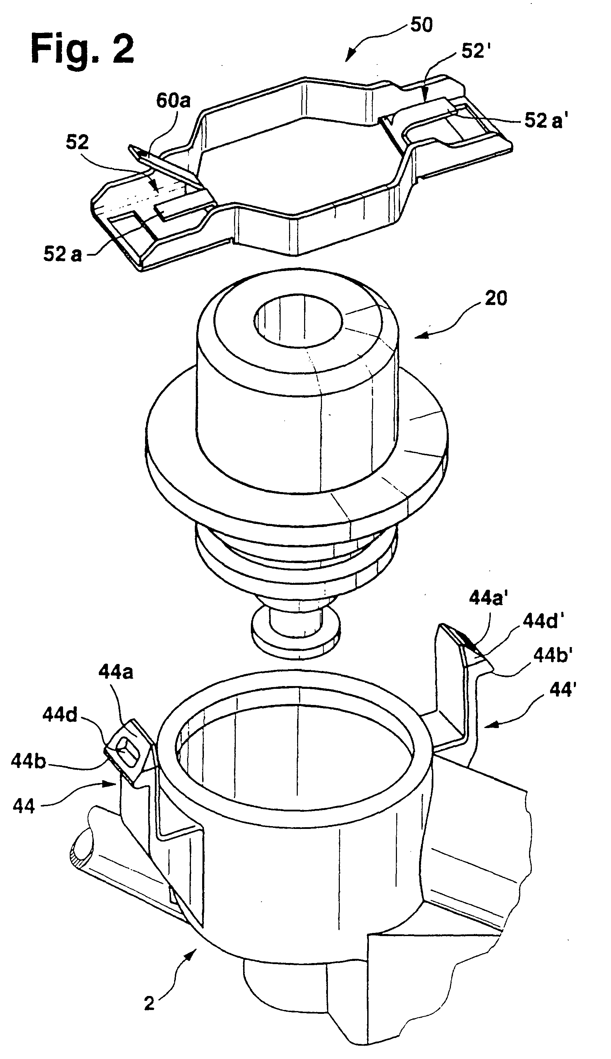

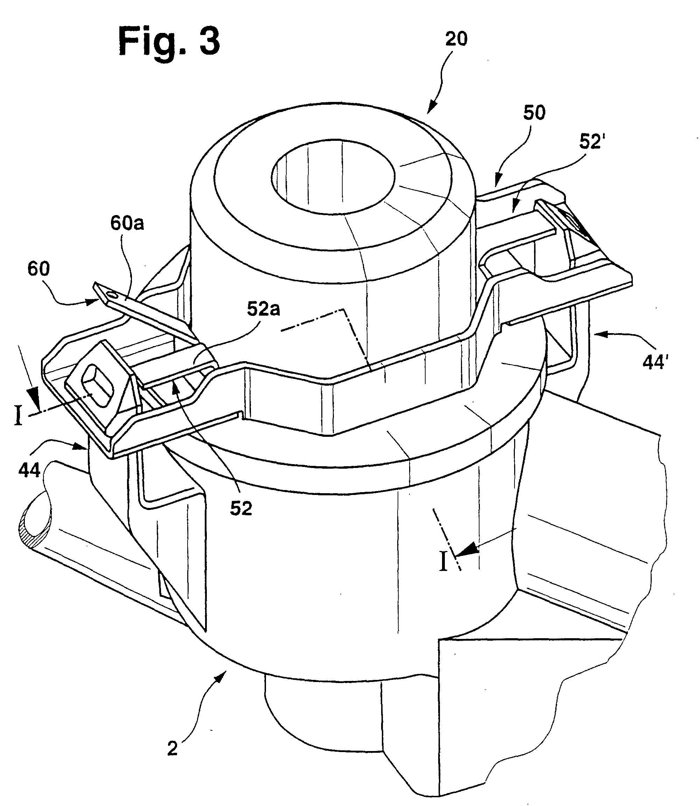

Die Figur 1 zeigt einen Längsschnitt durch das Aggregat 20 und durch einen Teilbereich des Körpers 2. Die Figur 3 zeigt perspektivisch schräg von der Seite in zusammengebautem Zustand den Körper 2, das Aggregat 20 und das das Aggregat 20 am Körper 2 haltende Befestigungselement 50. Die Figur 2 zeigt perspektivisch schräg von der Seite den Körper 2, das Aggregat 20 und das Befestigungselement 50 in sogenannter Explosionsdarstellung. Die in der Figur 1 dargestellte, abgewinkelt verlaufende Schnittebene ist in der Figur 3 durch eine mit I - markierte strichpunktierte Linie angedeutet.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Bei dem in den Figuren 1 bis 3 dargestellten Ausführungsbeispiel gibt es ein Blockierelement 52. Das Blockierelement 52 wird beim bevorzugt ausgewählten Ausführungsbeispiel von einer an das Befestigungselement 50 angeformten elastisch federnden Lasche 52a gebildet.

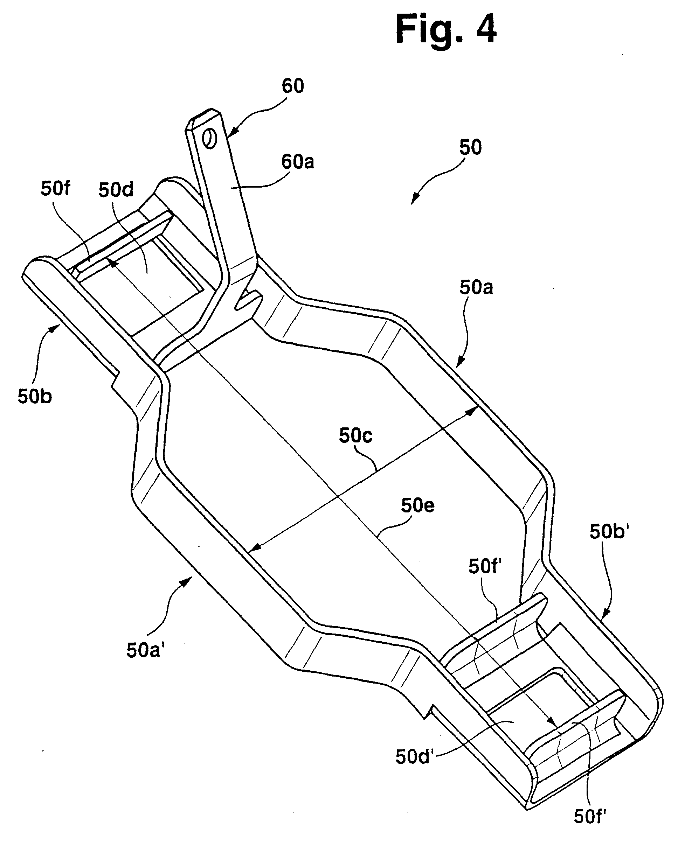

Am Körper 2 ist ein Halteelement 44 vorgesehen. Es können auch zwei oder mehr Halteelemente an dem Körper 2 angeformt sein. Bei den bevorzugt ausgewählten Ausführungsbeispielen sind an den Körper 2 zwei Halteelemente 44 und 44' (Fig. 2, 3, 5, 7) angeformt. Das Halteelement 44' kann gleich gestaltet sein wie das Halteelement 44. Am Befestigungselement 50 ist eine Aussparung 50d (Fig. 4) vorgesehen, oder es sind mehrere Aussparungen vorgesehen. Weil am Körper 2 zwei Halteelemente 44, 44' vorhanden sind, werden am Befestigungselement 50 zwei gleich gestaltete Aussparungen 50d, 50d' bevorzugt, damit jedes der Halteelemente 40, 40' an geeigneter Stelle an dem Befestigungselement 50 angreifen kann.

Neben dem Blockierelement 52 können mehrere weitere Blockierelemente vorgesehen sein. Weil am Körper 2 zwei Halteelemente 44, 44' vorhanden sind, werden am Befestigungselement 50 zwei Blockierelemente 52 und 52' bevorzugt. Das Blockierelement 52' ist gleich gestaltet wie das Blockierelement 52.

In der Figur 1 ist ein mit dem Bezugszeichen 54 markierter Pfeil eingezeichnet. Der Pfeil mit dem Bezugszeichen 54 gibt die Richtung an, in der das Befestigungselement 50 das Aggregat 20 gegen den Körper 2 festhält. Nachfolgend wird diese Richtung mit Halterichtung 54 bezeichnet.

Die **Figur 4** zeigt das Befestigungselement 50 als Einzelheit.

Bei dem in der Figur 4 gezeigten, beispielhaft ausgewählten Befestigungselement 50 wird gegenüber dem in den Figuren 1 bis 3 dargestellten Ausführungsbeispiel auf die Blockierelemente 52, 52' verzichtet. Bis auf die Blockierelemente 52, 52' ist das Befestigungselement 50 bei den in den Figuren 1 bis 4 dargestellten Ausführungsbeispielen im wesentlichen gleich aufgebaut.

Das Befestigungselement 50 hat einen Längsbereich 50a, einen Längsbereich 50a', einen Querbereich 50b und einen Querbereich 50b'. Das Befestigungselement 50 besteht aus gebogenem bzw. gestanztem Blechmaterial. An den Querbereichen 50b, 50b' ist der Übergang zu den Längsbereichen 50a, 50a' abgewinkelt. Das Befestigungselement 50 hat eine dem Wulst 38 (Fig. 1) zugewandte Unterseite 50g (Fig. 1). Im zusammengebauten Zustand verläuft die Unterseite 50g im wesentlichen parallel zu der Stirnseite 38a des Wulstes 38, bzw. im wesentlichen quer zur Halterichtung 54. Wegen der Abwinkelung (Fig. 4) an den Übergangen zwischen den Längsbereichen 50a, 50a' und den Querbereichen 50b, 50b' verlaufen die Seitenflächen der Längsbereiche 50a, 50a' im wesentlichen parallel zur Halterichtung 54 (Fig. 1). Die Ausdehnung der Längsbereiche 50a, 50a' in Halterichtung 54 ist wesentlich größer als die Dicke der Längsbereiche 50a, 50a' quer zur Halterichtung 54. Dadurch wird erreicht, daß die Querbereiche 50b, 50b' über die beiden Längsbereiche 50a, 50a' brückenartig steif miteinander verbunden sind, so daß nach dem Einhängen der Querbereiche 50b, 50b' in die Halteelemente 44, 44' das Befestigungselement 50 das Aggregat 20 gegen den Körper 2 hält, ohne nennenswert nachzugeben. Dadurch ergibt sich ein steifer Verbund zwischen dem Aggregat 20 und dem Körper 2, ohne daß befürchtet werden muß, daß infolge auf das Aggregat 20 einwirkender Kräfte das Aggregat 20 vom Körper 2 abgeht.

Zwischen den Längsbereichen 50a, 50a' des Befestigungselements 50 gibt es einen freien Abstand 50c (Fig. 4). Vor dem Zusammenbau ist der Abstand 50c kleiner als der Durchmesser der äußeren Mantelfläche 22c (Fig. 1) des Aggregats 20. Weil die Längsbereiche 50a, 50a' quer zur Halterichtung 54 ziemlich dünn sind, federn die Längsbereiche 50a, 50a' quer zur Halterichtung 54 ausreichend gut, so daß trotz des kleinen Abstands 50c das Befestigungselement 50 ohne nennenswerten Aufwand über die Mantelfläche 22c des Gehäuses 22 des Aggregats 20 gestülpt werden kann, bis die dem Wulst 38 zugewandte Unterseite 50g des Befestigungselements 50 an der Stirnseite 38a (Fig. 1) zur Anlage kommt.

Im Querbereich 50b ist die Aussparung 50d mit einer Kante 50f vorgesehen. Entsprechend gibt es im Querbereich 50b' die Aussparung 50d' mit einer Kante 50f'. Die einander abgewandten Kanten 50f, 50f' der Aussparungen 50d, 50d' haben zueinander einen in der Zeichnung mit 50e bezeichneten Abstand (Fig. 4).

Das Halteelement 44 hat an seinem äußeren Ende einen Haltekopf 44d. Am Haltekopf 44d gibt es eine nach außen weisende Schräge 44a und eine in Richtung gegen den Körper 2 weisende Haltefläche 44b (Fig. 1, 2). Zwischen dem Haltekopf 44d und dem Körper 2 ist das Halteelement 44 mit einem elastischen Bereich 44c (Fig. 1) versehen. Der elastischen Bereich 44c entsteht auf einfache Weise dadurch, daß zwischen dem Haltekopf 44d und dem Ansatz des Halteelements 44 an den Körper 2 ein länglicher Stiel vorgesehen ist. weil beide Halteelement 44, 44' bevorzugt gleich gestaltet sind, hat das Halteelement 44' einen Haltekopf 44d', eine Schräge 44a', eine Haltefläche 44b' und ebenfalls einen elastischen Bereich.

Der Abstand 50e zwischen den Kanten 50f, 50f' ist so dimensioniert, daß beim Aufschieben des Befestigungselements 50 gegen den Körper 2 die Kanten 50f, 50f' an den Schrägen 44a, 44a' zur Anlage kommen. Wird nun das Befestigungselement 50 gegen den Körper 2 gedrückt, dann federn die Halteköpfe 44d, 44d' infolge der elastischen Bereiche 44c radial nach innen, bis die Kanten 50f, 50f' auf die Seite der Halteflächen 44b, 44b' gelangen. Dabei schnappen die Halteköpfe 44d, 44d' elastisch federnd radial nach außen, so daß das Befestigungselement 50 an den Kanten 50f, 50f' von den Halteflächen 44b, 44b' der Halteelemente 44, 44' gehalten wird.

Solange die Halteköpfe 44d, 44d' (Fig. 2) während des Aufschiebens des Befestigungselements 50 auf die Halteelemente 44, 44' elastisch federnd radial nach innen ausgelenkt sind, werden die Lasche 52a vom Haltekopf 44d und die Lasche 52a' vom Haltekopf 44d' entgegen der Montagerichtung elastisch federnd ausgelenkt. Sobald mit Beendigung des Aufsteckens des Befestigungselements 50 auf die Halteelemente 44, 44' die Halteköpfe 44d, 44d' radial nach außen federn, können auch die Laschen 52a, 52a' in die in der Figur 1 dargestellte Lage zurückfedern, in der sich die Lasche 52a auf der der Kante 50f abgewandten Seite des Haltekopfs 44d und die Lasche 52a' auf der der Kante 50f' abgewandten Seite des Haltekopfs 44d' befinden, so daß auch bei eventuellem Auftreten größerer Kräfte wegen der Laschen 52a bzw. 52a' ein radial nach innen gerichtetes Federn des Haltekopfs 44d bzw. 44d' nicht möglich ist. Die Lasche 52a bildet dadurch in Zusammenarbeit mit dem Halteelement 44 das Blockierelement 52, das verhindert, daß auch bei Auftreten größerer Kräfte das Befestigungselement 50 von dem Halteelement 44 abrutschen kann. Entsprechend bildet die Lasche 52a' das Blockierelement 52', das ein Abrutschen des Befestigungselement 50 vom Halteelement 44' verhindert. Dadurch kann der elastische Bereich 44c des Halteelements 44 bzw. 44' relativ weich ausgebildet werden, weshalb zum Herstellen der Halteelemente 44 und 44' kein großer Materialbedarf erforderlich ist.

Um ein ungewolltes Abrutschen des Befestigungselements 50 vom Körper 2 sicher auszuschließen, wird vorgeschlagen, die Anzahl der Blockierelemente 52, 52' gleich groß zu wählen wie die Anzahl der am Körper 2 vorgesehenen Halteelemente 44, 44'.

In Halterichtung 54 betrachtet, ist der Abstand zwischen der Haltefläche 44b und dem stirnseitigen Absatz 8 (Fig. 1) des Körpers 2 so dimensioniert, daß das Befestigungselement 50 an den Halteelementen 44, 44' eingerastet werden kann, ohne daß dabei der Wulst 38 des Gehäuses 22 gegen den stirnseitigen Absatz 8 des Körpers 2 gepreßt werden muß. Dies erleichtert die Montage des Aggregats 20 an den Körper 2 wesentlich. Im fertig zusammengebauten Zustand gibt es in Halterichtung 54 ein leichtes Spiel s (Fig. 1) zwischen dem zwischen den Halteflächen 44b, 44b' und dem stirnseitigen Absatz 8 eingebauten Befestigungselement 50 und dem Wulst 38. Aufgrund dieses Spiels s wäre ohne das elastische Andrücken des mindestens einen Längsbereichs 50a und/oder 50a' des Befestigungselements 50 gegen das Gehäuse 22 quer zur Halterichtung 54 eine elektrische Kontaktierung zwischen dem Befestigungselement 50 und dem Gehäuse 22 nicht unter allen Umständen gewährleistet. Weil der Führungsring 28 und die Scheibe 32 vorzugsweise aus elektrisch nichtleitendem Kunststoff bestehen, ist auch hier eine elektrische Kontaktierung nicht gewährleistet. Hinzu kommt, daß als Material für den Körper 2 zunehmend elektrisch nichtleitender Kunststoff verwendet wird. Dies führt dazu, daß das Aggregat 20 elektrisch isoliert angeordnet ist. Dadurch kann es, insbesondere wenn Kraftstoff mit hoher Strömungsgeschwindigkeit durch das Aggregat 20 strömt, zu einer elektrostatischen Aufladung des Aggregats 20 kommen. Weil normalerweise das Gehäuse 22 aus elektrisch leitendem Material, vorzugsweise Metall, besteht, kann die elektrostatische Aufladung des Gehäuses 22 gegebenenfalls zu einer gefährlichen Entladung führen. Weil bei der hier vorgeschlagenen Befestigungsanordnung das Befestigungselement 50 mit dem Gehäuse 22 des Aggregats 20 einen guten elektrischen Kontakt hat, ist es leicht möglich, das Aggregat 20 über das Befestigungselement 50 an ein definiertes elektrisches Potential anzuschließen, wodurch eine elektrostatische Aufladung des Gehäuses 22 des Aggregats 20 ausgeschlossen wird.

Das Befestigungselement 50 seinerseits kann leicht an ein elektrisches Potential angeschlossen werden, beispielsweise durch Anlöten oder Anschweißen eines mit einem definierten elektrischen Potential verbundenen Drahtes. Das definierte elektrische Potential ist beispielsweise die Masse eines Kraftfahrzeugs oder ein Minuspol oder ein Pluspol innerhalb des Kraftfahrzeugs.

Um den Anschluß des Befestigungselements 50 an ein definiertes elektrisches Potential zu erleichtern, wird vorgeschlagen, an dem Befestigungselement 50 einen Anschluß 60 vorzusehen, über den ein elektrischer Leiter 62 (Fig. 1), beispielsweise eine Litze eines Kabels, leicht angeschlossen werden kann. Der Anschluß 60 gewährleistet eine sichere elektrische Verbindung zwischen dem Leiter 62 und dem Befestigungselement 50. Der elektrische Leiter 62 führt zu einem definierten elektrischen Potential. Der Anschluß 60 ist bei den bevorzugt ausgewählten Ausführungsbeispielen in Form eines Flachsteckkontakts 60a ausgebildet. Der Flachsteckkontakt 60a ist so dimensioniert, daß ein im Kraftfahrzeugbau häufig verwendeter Stecker 62a leicht an das Befestigungselement 50 angesteckt werden kann. Der Stecker 62a ist an dem elektrischen Leiter 62 angebracht. Zum Herstellen des Flachsteckkontakts 60a wird beim Ausstanzen des Befestigungselements 50 ein entsprechend ausgestanzter Blechbereich herausgebogen, so daß ein leichtes Anstecken des Steckers 62a möglich ist.

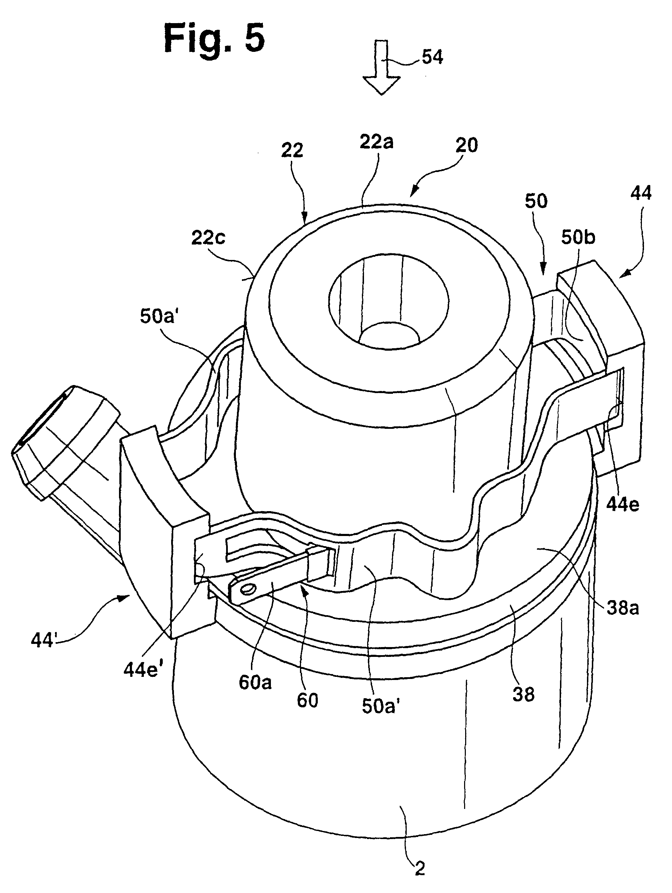

Die **Figur 5** zeigt ein weiteres bevorzugt ausgewähltes, besonders vorteilhaftes Ausführungsbeispiel.

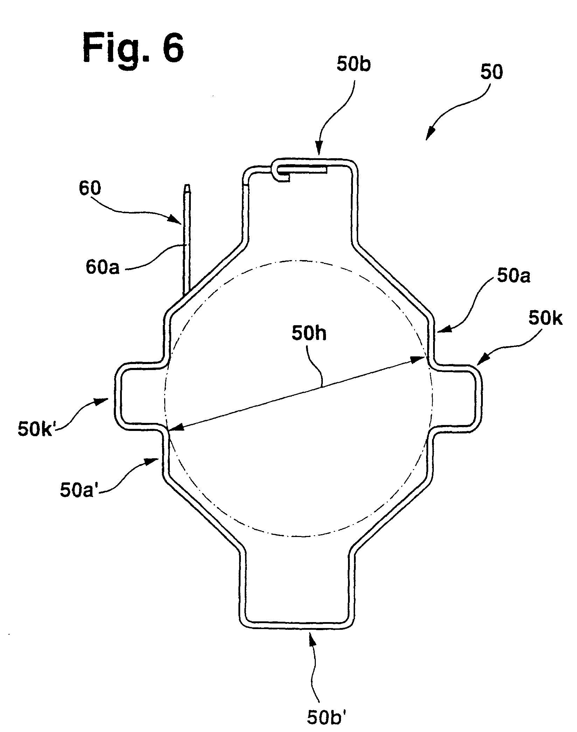

Bei dem in der Figur 5 dargestellten Ausführungsbeispiel besteht das Befestigungselement 50 aus einem Blechstreifen, dessen Formgebung in der Figur 6 in Draufsicht dargestellt ist.

Das aus einem Bandmaterial hergestellte Befestigungselement 50 ist, bei Draufsicht betrachtet, vorzugsweise wie in der Figur 6 geformt. Das Bandmaterial hat zwei Enden, die beispielsweise im Bereich des Querbereichs 50b miteinander verbunden sind. Die Verbindung der beiden Enden des Bandmaterials kann beispielsweise wie bei Schlauchklemmen üblich erfolgen.

Bevor das Befestigungselement 50 auf das Gehäuse 22 des Aggregats 20 gesteckt wird, umschließen die Längsbereiche 50a, 50a' einen gedachten Kreis mit einem Durchmesser 50h. Der gedachte Kreis mit dem Durchmesser 50h ist in der Figur 6 strichpunktiert angedeutet. Der Durchmesser 50h (Fig. 6) ist kleiner als der Durchmesser der Mantelfläche 22c (Fig. 5) des Gehäuses 22. Weil der Durchmesser 50h des gedachten Kreises kleiner ist als der Durchmesser der Mantelfläche 22c und weil das Befestigungselement 50 aus elastisch federndem Material besteht, werden nach dem Aufschieben des Befestigungselements 50 auf das Gehäuse 22 die Längsbereiche 50a, 50a' quer zur Halterichtung 54 elastisch gegen das Gehäuse 22 gespannt. Dies sorgt auch bei diesem Ausführungsbeispiel für eine sichere elektrische Kontaktierung zwischen dem Gehäuse 22 und dem Befestigungselement 50.

Bei dem in der Figur 5 gezeigten Ausführungsbeispiel ist am Befestigungselement 44 eine radial nach innen weisende Nut 44e vorgesehen. Entsprechend hat auch das Halteelement 44' eine Nut 44e'. Nach dem Aufschieben des Befestigungselements 50 auf das Gehäuse 22 kann durch leichtes Drehen des Befestigungselements 50 der Querbereich 50b in die Nut 44e hineingeschoben werden. Dabei kommt auch der Querbereich 50b' in Eingriff mit der Nut 44e'. Weil das Befestigungselement 50 in Halterichtung 54 relativ groß dimensioniert ist, ist das Befestigungselement 50 in Halterichtung 54 ziemlich steif und kann somit das Aggregat 20 in Halterichtung 54 gut und unnachgiebig festhalten. Weil andererseits das Befestigungselement 50 quer zur Halterichtung 54 aus relativ dünnem Material besteht, sind die Längsbereiche 50a, 50a' quer zur Halterichtung 54 relativ gut elastisch nachgiebig, so daß ein leichtes Aufschieben des Befestigungselements 50 auf das Gehäuse 22 möglich ist.

An dem Befestigungselement 50, vorzugsweise in den Längsbereichen 50a, 50a', können radial nach außen ragende Ausbuchtungen vorgesehen sein. Durch diese Ausbuchtungen entstehen an dem Befestigungselement 50 Angriffstellen 50k, 50k' (Fig. 6). An diesen Angriffstellen 50k, 50k' kann leicht ein Werkzeug angesetzt werden, so daß es keine Probleme bereitet, die Längsbereiche 50a, 50a' etwas auseinander zu ziehen, wodurch ein leichtes Überstülpen des Befestigungselements 50 auf die Mantelfläche 22c des Gehäuses 22 möglich ist.

Beim Auseinanderziehen der Angriffsstellen 50k, 50k' (Fig. 6) verkürzt sich der Abstand zwischen den beiden Querbereichen 50b, 50b', so daß das Befestigungselement 50 ohne das oben beschriebene Verdrehen in axialer Richtung auf das Gehäuseteil 22a des Aggregats 20 bis an die Stirnseite 38a des Wulstes 38 aufgeschoben werden kann (Fig. 5). Nach dem Loslassen der Angriffsstellen 50k, 50k' federn die Angriffsstellen 50k, 50k' radial nach innen gegen die Mantelfläche 22c des Aggregats_20. Dabei federn auch die Querbereiche 50b, 50b' des Befestigungselements 50 radial nach außen und greifen somit fest in die Nuten 44e, 44e' der Halteelemente 44, 44'. Dies ermöglicht ein einfaches Aufschieben des Befestigungselements 50 ohne eine Verdrehung dieses Elements.

Wie die Figuren 5 und 6 zeigen, kann durch Ausstanzen der Flachsteckkontakt 60a für den Anschluß 60 an das Befestigungselement 50 angeformt werden, ohne daß dafür ein zusätzlicher Materialbedarf erforderlich ist.

Bei dem in den Figuren 5 und 6 dargestellten Ausführungsbeispiel kann beim Halteelement 44 auf den in der Figur 1 gezeigten elastischen Bereich 44c verzichtet werden.

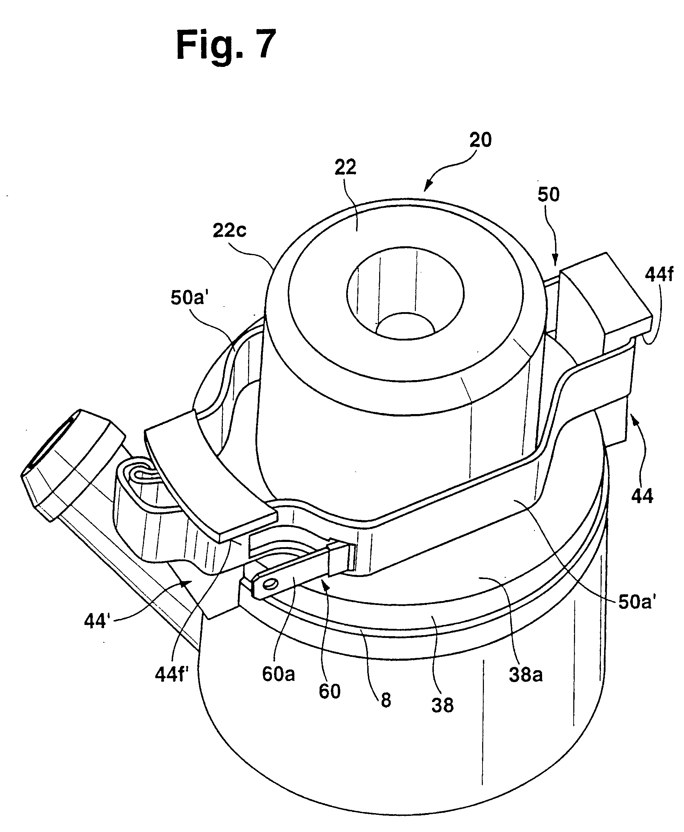

Die **Figur 7** zeigt ein weiteres, bevorzugt ausgewähltes, besonders vorteilhaftes Ausführungsbeispiel.

Bei dem in der Figur 7 gezeigten Ausführungsbeispiel ist an dem Halteelement 44 eine in Richtung des stirnseitigen Absatzes 8 weisende Haltefläche 44f vorgesehen. Das Halteelement 44' hat eine entsprechende Haltefläche 44f'. Das aus Flachstahl bestehende Befestigungselement 50 wird nach dem Einbau des Aggregats 20 an den Körper 2 zwischen der Stirnseite 38a des Aggregats 20 und den Halteflächen 44f, 44f' der Halteelemente 44, 44' eingelegt. Nach dem Einlegen des Befestigungselements 50 werden die Enden des Bandmaterials, so wie es bei Schlauchklemmen häufig üblich ist, zusammengefügt. Dadurch ist gewährleistet, daß das Aggregat 20 unnachgiebig und sicher am Körper 2 gehalten wird, und gleichzeitig wird wegen der Elastizität quer zur Halterichtung 54 und durch das elastische Andrücken des Längsbereichs 50a und/oder des Längsbereichs 50a' quer zur Halterichtung 54 gegen das Gehäuse 22 eine gute elektrische Kontaktierung zwischen dem Gehäuse 22 und dem Befestigungselement 50 gewährleistet.

Aufgrund der elektrischen Kontaktierung des Aggregats 20 über das Befestigungselement 50 ist vorteilhafterweise keine Abänderung des Aggregats 20 erforderlich, um das Aggregat 20 an einem definierten elektrischen Potential anschließen zu können.

Wegen der guten Elastizität des Befestigungselements 50 quer zur Halterichtung 54 ist gewährleistet, daß auch bei großen Maßtoleranzen beim Aggregat 20 eine gute elektrische Kontaktierung zwischen dem Aggregat 20 und dem Befestigungselement 50 gewährleistet ist.

Bei den dargestellten Ausführungsbeispielen ist die Mantelfläche 22c des Aggregats 20 zylindrisch. Es kann auch sein, daß die Mantelfläche 22c beispielsweise kegelstumpfförmig ist. In diesem Fall kann die Richtung der elastischen Vorspannung des mindestens einen in den Längsbereichen vorgesehenen elastischen Federbereichs entsprechend angepaßt werden, so daß der Federbereich unter einem Winkel zwischen beispielsweise 60° und 90° gegenüber der Halterichtung 54 gegen das Aggregat federnd vorgespannt ist.

Das Befestigungselement 50 hält das Aggregat 20 an dem Körper 2. Bei der hier vorgeschlagenen Befestigungsanordnung wird über die elastische Vorspannung des mindestens einen Federbereichs 50a, 50a' quer zur Halterichtung 54 eine sichere elektrische Verbindung zwischen dem Aggregat 20 und dem Befestigungselement 50 gewährleistet. Dadurch ist es möglich, das Aggregat 20 über das Befestigungselement 50 einfach und leicht mit einem definierten elektrischen Potential zu verbinden. Die Befestigungsanordnung ist insbesondere für eine Kraftstoffversorgungsanlage einer Brennkraftmaschine eines Kraftfahrzeugs vorgesehen.

## Patentansprüche

1. Befestigungsanordnung einer Kraftstoffversorgungsanlage mit einem Körper (2) und mit einem Aggregat (20) und mit einem das Aggregat (20) gegen den Körper (2) in einer Halterichtung (54) haltenden Befestigungselement (50), **dadurch gekennzeichnet, dass** an dem Befestigungselement (50) mindestens ein Federbereich (50a, 50a'), der im wesentlichen quer zu der Halterichtung (54) gegen das Aggregat (20, 22c) elastisch federnd vorgespannt ist, vorgesehen ist und an das Befestigungselement (50) ein Anschluss (60) zum Anschließen eines elektrischen Leiters (62) einstückig angeformt ist.

2. Befestigungsanordnung nach Anspruch 1, **dadurch gekennzeichnet, dass** der Anschluss (60) von einem Flachsteckkontakt (60a) gebildet wird.

3. Befestigungsanordnung nach Anspruch 1 oder 2, **dadurch gekennzeichnet, dass** das Befestigungselement (50) im Federbereich (50a, 50a') quer zur Halterichtung (54) dünner als in der Halterichtung (54) ausgeführt ist.

4. Befestigungsanordnung nach einem der Ansprüche 1 bis 3, **dadurch gekennzeichnet, dass** an dem Körper (2) mindestens ein das Befestigungselement (50) hintergreifendes Halteelement (44, 44') vorgesehen ist.

5. Befestigungsanordnung nach Anspruch 4, **dadurch gekennzeichnet, dass** das Halteelement (44, 44') quer zu der Halterichtung (54) federnd ist.

6. Befestigungsanordnung nach Anspruch 4 oder 5, **dadurch gekennzeichnet, dass** an dem Befestigungselement (50) mindestens ein ein Lösen des Halteelements (44, 44') vom Befestigungselement (50) verhinderndes Blockierelement (52, 52', 52a, 52a') vorgesehen ist.

## Claims

1. Fastening arrangement for a fuel supply system, having a body (2) and having a unit (20) and having a fastening element (50) which holds the unit (20) against the body (2) in a holding direction (54), **characterized in that** at least one spring region (50a, 50a*'*) which is prestressed elastically and resiliently against the unit (20, 22c) essentially transversely with respect to the holding direction (54) is provided on the fastening element (50) and a connection (60) for the connection of an electric conductor (62) is integrally formed on the fastening element (50).

2. Fastening arrangement according to Claim 1, **characterized in that** the connection (60) is formed by a push-on contact (60a).

3. Fastening arrangement according to Claim 1 or 2, **characterized in that** the fastening element (50) is designed to be thinner in the spring region (50a, 50a') transversely with respect to the holding direction (54) than in the holding direction (54).

4. Fastening arrangement according to one of Claims 1 to 3, **characterized in that** at least one holding element (44, 44') which grips behind the fastening element (50) is provided on the body (2).

5. Fastening arrangement according to Claim 4, **characterized in that** the holding element (44, 44') is resilient transversely with respect to the holding direction (54).

6. Fastening arrangement according to Claim 4 or 5, **characterized in that** at least one blocking element (52, 52', 52a, 52a') which prevents the holding element (44, 44') from being detached from the fastening element (50) is provided on the fastening element (50).

## Revendications

1. Dispositif de fixation d'un système d'alimentation en carburant comprenant un corps (2), un organe (20) et un élément de fixation (50) maintenant l'organe (20) contre le corps (2) selon une direction de maintien (54),
**caractérisé en ce qu'**
il est prévu sur l'élément de fixation (50) au moins une zone élastique (50a, 50a') qui est précontrainte élastiquement contre l'organe (20, 22c) selon une direction essentiellement perpendiculaire à la direction de maintien (54), l'élément de fixation (50) portant, moulé monobloc avec lui, un raccord (60) pour un conducteur électrique (62).

2. dispositif de fixation selon la revendication 1,
**caractérisé en ce que**
le raccord (60) est constitué par une fiche plate (60a).

3. Dispositif de fixation selon la revendication 1 ou 2,
**caractérisé en ce que**
l'élément de fixation (50), dans sa zone élastique (50a, 50a'), est plus mince dans la direction perpendiculaire à la direction de maintien (54) que dans celle-ci.

4. Dispositif de fixation selon l'une des revendications 1 à 3,
**caractérisé en ce que**
sur le corps (2) au moins un élément de maintien (44, 44') est en prise par derrière avec l'élément de fixation (50).

5. Dispositif de fixation selon la revendication 4,
**caractérisé en ce que**
l'élément de maintien (44, 44') est élastique perpendiculairement à la direction de maintien (54).

6. Dispositif de fixation selon la revendication 4 ou 5,
**caractérisé en ce que**
sur l'élément de fixation (50) au moins un élément de blocage (52, 52', 52a, 52a') empêche l'élément de maintien (44, 44') de se séparer de l'élément de fixation (50).
